# EUROPÄISCHE PATENTSCHRIFT

(11) **EP 2 664 254 B1**
(45) Veröffentlichungstag und Bekanntmachung des Hinweises auf die Patenterteilung: **03.02.2016**
(21) Anmeldenummer: 12003866.6
(22) Anmeldetag: 16.05.2012
(51) Int. Cl.: A47B 88/00, F16B 12/24, F16B 12/04

(54) **Verfahren zur Herstellung eines Möbels mit mehreren Schubladen**
Process for production of a furniture with multiple drawers
Procédé pour la fabrication d'un meuble avec plusiers tiroirs

(43) Veröffentlichungstag der Anmeldung: 20.11.2013
(73) Patentinhaber: Steelcase Inc., Grand Rapids, Michigan 49508 (US)
(72) Erfinder: Hühnerbein, Frank, 83135 Schechen (DE); Scholz, Manfred, 83026 Rosenheim (DE)
(74) Vertreter: Andrae | Westendorp Patentanwälte Partnerschaft

(56) Entgegenhaltungen:
- EP-A1- 0 686 778
- CH-A5- 600 176
- DE-A1- 2 418 198
- DE-U1- 9 002 467

## Beschreibung

Die Erfindung betrifft ein Verfahren zur Herstellung eines mehrere Schubladen umfassenden Möbels sowie ein danach hergestelltes Möbel.

Viele Möbel für den Büro- wie auch den Privatbereich umfassen eine oder mehrere Schubladen. Bekannt sind beispielsweise Schränke, Kommoden, Container einschließlich Rollcontainer etc., die häufig mit mehreren übereinander (gegebenenfalls alternativ und ergänzend auch nebeneinander) positionierten Schubladen ausgestattet sind.

Werden beispielsweise mehrere Schubladen übereinander vorgesehen, so können diese alle eine gleiche oder unterschiedliche Höhe haben, je nach dem, was in den einzelnen Schubladen abgelegt werden soll.

Derartige Schubladen bestehen häufig aus einem Schubladenrahmen, der neben einem Schubladenboden eine linke sowie eine rechte Schubladenwange umfasst, an der üblicherweise an nach außen weisenden Seitenflächen die entsprechenden Verbindungs- oder Rollelemente vorgesehen sind, mit der die Schublade an den entsprechenden Führungseinrichtungen an den Innenseiten der vertikalen Seitenwände des betreffenden Möbels verankert gehalten und verfahren werden kann. Der erwähnte Schubladenrahmen umfasst dabei ferner in der Regel ein Schubladenhinterstück, also eine sogenannte Schubladenrückwand und häufig auch noch eine frontseitige Seitenwange, nämlich ein sogenanntes Schubladenvorderstück oder eine sogenannte Schubladenfront, an der dann die nach außen hin sichtbare und üblicherweise seitlich und nach oben und unten über den Schubladenrahmen überstehende Frontblende befestigt ist. Auf der Vorderseite der Frontblende können noch entsprechende Haltegriffe oder sonstige Griffeinrichtungen vorgesehen sein, um die Schublade zum Öffnen und Schließen zu ergreifen.

Üblicherweise erfolgt die Verbindung der Schubladen-Frontblende mit dem Schubladenrahmen über eine Steckverbindung, beispielsweise in Form eines Holzdübels, der beispielsweise mit dem Schubladenrahmen fest verbunden ist oder mit Hilfe von Schrauben verbunden ist. An entsprechender Stelle ist auf der Rückseite der Frontblende eine entsprechende Bohrung oder Ausnehmung vorgesehen, derart, dass dann zur Verbindung der Frontblende mit dem Schubladenrahmen die Frontblende auf den Schubladenrahmen so aufgesetzt werden kann, dass der oder die betreffenden dübelartigen Steckverbindungselemente in die entsprechenden Steckaufnahmeöffnungen an der Rückseite der Schubladenblende eingreifen.

Dadurch ergibt sich ein fester Presssitz. Ferner kann auch noch Klebemittel verwendet werden, um die Verbindung zwischen Schubladenblende und Schubladenrahmen dauerhaft fest zu gestalten.

Derartige Techniken sind beispielsweise aus der DE 1 924 915 U, der DE 27 08 167 A1 oder beispielsweise der DE 27 11 036 A1 als bekannt zu entnehmen. So wird beispielsweise gemäß der DE 27 11 036 erwähnt, dass die für die Verbindung verwendeten Dübel in die Sackbohrungen auf der Rückseite der Schubladenblende unter Erzielung einer Verrastung eingesteckt werden können, um letztlich eine kraft- und/oder formschlüssige Verbindung zu erzielen. Erwähnt wird ferner, dass eine Befestigung der Frontblende an dem Schubladenrahmen auch durch Kleben, Einpressen, Einpassen nach dem Prinzip von Nut und Feder, Hintergreifen von Vorsprüngen nach dem Widerhakenprinzip und vieles mehr durchgeführt werden kann.

Wichtig ist bei der Herstellung derartiger, beispielsweise mehrere übereinander angeordnete Schubladenelemente umfassender Möbel, dass mit hoher Genauigkeit und Präzision gearbeitet wird. Wenn nämlich die seitlich an den Schubladenrahmen vorgesehenen Führungselemente zum Einschieben und Ausziehen einer Schubladen sowie die entsprechenden damit zusammenwirkenden auf den Hebelinnenseiten eines Korpusses befindlichen Führungseinrichtungen nicht exakt montiert sind, kann dies zur Folge haben, dass die einzelnen Schubladenelemente vielleicht nur in geringem Maße leicht schief zueinander positioniert werden. Geringste Winkelabweichungen sind aber in derartigen Fällen sofort sichtbar, da sich beispielsweise die Höhe des gering dimensionierten Abstandsspaltes zwischen der Oberkante einer Schubladenblende und der Unterkante einer darüber befindlichen Schubladenblende über die Breite der Schublade ändert, was mit dem bloßen Auge sofort erkennbar ist.

Aus der DE 90 02 467 U1 ist eine Vorrichtung zur Befestigung einer Vorsatzfront an einem Schubladen als bekannt zu entnehmen. Dabei werden einstellbare Befestigungsmittel verwendet, mit denen die Stellung der Front in Bezug auf den Schubladen eingestellt bzw. verändert werden kann. Dazu ist ein Schraubbolzen vorgesehen, der auf der Innenseite des Schubladens durch eine dort vorgesehene Bohrung in eine Sackausnehmung in der Schubladenwand eingedreht werden kann, wobei die Bohrung in der Innenseite des Schubladens größer ist als der Durchmesser des Schraubenbolzens. Die Schraube wird in der Schubladenfront in einer dort eingeklebten Muffe festsitzend eingedreht. Durch die größere Öffnung in der der Frontblende benachbart sitzenden Schubladenwand kann die Schraube mit der Schubladenblende relativ zur Schubladenwand in leicht unterschiedlicher Lage eingestellt werden. Dazu muss der Schubladen von der Innenseite her frei zugänglich sein.

Aus der CH 600 176 ist ferner ein Verfahren zur Herstellung einer geleimten Dübelverbindung als bekannt zu entnehmen. Mittels einer derartigen Verbindung können beispielsweise mehrere Holzteile miteinander verbunden werden. Beschrieben wird dies bzgl. der Verbindung eines Stuhlbeins mit einer Zarge. Dazu wird in dem einen Holzteil eine (oder mehrere parallel verlaufende) Sackbohrungen eingebracht, in die entsprechende Dübel trocken eingeführt werden. Das Gleiche gilt für das zweite Holzteil, das mit dem ersten Holzteil verbunden werden soll. Fluchtend zu den Sackbohrungen im ersten Holzteil sind entsprechende Bohrungen im zweiten Holzteil vorgesehen, die es erlauben, dass die beiden zu verbindenden Holzteile mit den dazwischen in den Bohrungen sitzenden Dübeln miteinander verbunden werden können. Die jeweiligen Bohrungen in den beiden Holzteilen sind so auf den Durchmesser der Dübel abgestimmt, dass diese mit geringst möglichem Spiel auf die Bohrung passen. Eines des beiden Holzteile weist dabei eine die Bohrung verbindende Steigleitung auf, die zu einer von außen her zugänglichen Öffnung führt. Hierüber kann dann mittels einer Kolbenpresse oder dergleichen eine vorbestimmte Menge Kaltleim, Warmleim oder Flüssigkunststoff über die Öffnung in die Steigleitung gepresst werden. Der Leim gelangt aus der Steigleitung in die inneren Enden der Bohrungen des einen Holzteils und gelangt dann entlang der Leimaufnahmerillen in den Dübeln in die Sackbohrungen des damit zu verbindenden ersten Holzteils, so dass in einem Arbeitsgang alle Zwischenräume zwischen den Dübeln und den sie umgebenden Wandungen der Bohrrinnen ausgefüllt werden können.

Aufgabe der vorliegenden Erfindung ist es vor diesem Hintergrund, ein verbessertes Verfahren zu schaffen, um eine höchst genaue Montage und Ausrichtung der Schubladen zu ermöglichen.

Die Aufgabe wird erfindungsgemäß bzgl. des Verfahrens entsprechend den im Anspruch 1 angegebenen Merkmalen gelöst.

Vorteilhafte Ausgestaltungen der Erfindung sind in den Unteransprüchen angegeben.

Bei der vorliegenden Erfindung wird mit verblüffend einfachen Maßnahmen eine deutliche Verbesserung erzielt.

Im Rahmen der Erfindung ist nämlich vorgesehen, dass die Schubladen einschließlich der Schubladen-Führungselemente sowie die Führungseinrichtungen an dem Möbel-Korpus wie üblich auch zunächst montiert werden, und dass dann diese Schubladenelemente in den Korpus eingesetzt werden können. Die Befestigung der Schubladenblenden an den Schubladenrahmen erfolgt erst anschließend.

Dazu ist, wie beim Stand der Technik auch, zwischen dem Schubladenrahmen und den Schubladenblenden eine Art Steckverbindung vorgesehen, die im Rahmen der Erfindung aber nur als Vorjustiereinrichtung dient. Allerdings sind die Steckvorsprünge von ihrer Querschnittserstreckung und/oder Formgebung zumindest geringfügig kleiner als die Querschnittsöffnung und/oder Formgebung der Einstecköffnungen, mit der Folge, dass beim Aufsetzen der Blende auf den Schubladenrahmen die Blende mit einem vorgegebenen Spiel relativ zum Schubladenrahmen mit Spiel nur vorjustiert ist, also in gewissen Bereichen in Längs- oder in Querrichtung dazu, also Seiten- und in Höhenrichtung relativ zum darunter befindlichen Schubladenrahmen bewegbar ist.

Zur Erzielung einer festen Verbindung zwischen der Schubladenblende mit dem Schubladenrahmen wird nunmehr eine bevorzugt während des Abkühlens schnell aushärtende Heißplastik oder gegebenenfalls auch ein schnell aushärtender Kleber verwendet, der letztlich den das Spiel erzeugenden Freiraum zwischen den Steckvorsprüngen und den Einstecköffnungen ausfüllt. Nach dem Befüllen der Einstecköffnungen mit dem Kleber und dem Zusammenfügen der Schubladenrahmen und der Schubladenblenden kann dann beispielsweise auch unter Verwendung einer entsprechenden Ausricht-Lehre oder einem sonstigen Ausricht-Hilfselement die zunächst nur vorjustierte und mit Spiel noch relativ lageveränderliche Blende exakt so ausgerichtet werden, dass beispielsweise zwei übereinander angeordnete Schubladenblenden über ihre Gesamtbreite einen exakt gleichen Abstandsspalt aufweisen. In dieser Lage werden die Blenden beispielsweise dann für 20 bis 30 Sekunden gehalten, bis die verwendete Heißplastik oder der schnell aushärtende Kleber hart geworden ist und die Blende in der optimal gewünschten Position relativ zum Schubladenrahmen fixiert hält.

Mit anderen Worten können herstellbedingte Toleranzfehler bezüglich der Verankerung und Führung der einzelnen Schubladenelemente dadurch ausgeglichen werden, dass unabhängig von derartigen Toleranzfehlern die Schubladenblenden völlig korrekt in ihrer optimalen Ausrichtlage zueinander an den Schubladen befestigt werden.

In einer Abwandlung der Erfindung ist der Einsteckvorsprung oder der Dübel mittels einer Schraube oder eine Schraubbefestigung am Schubladenrahmen befestigt. Dies eröffnet zudem die Möglichkeit die Blende beschädigungsfrei bei Bedarf von dem Schubladenrahmen zu lösen.

Zwar ist aus der EP 0 686 778 A1 auch noch ein Verfahren als bekannt zu entnehmen, bei dem ein Befestigungselement beispielsweise in Form einer Schraube oder eines Gewindestabes in einem Bohrloch aus Holz verankert werden kann. Dazu wird die Wandung des Bohrloches im Holz mit Hilfe eines Gewindeformers mit einer Profilierung versehen, wobei eine Materialverdichtung stattfindet. Der Außendurchmesser des schrauben- oder zylinderförmigen Befestigungselementes weist dabei einen deutlich geringeren Außendurchmesser auf als der freie Innendurchmesser der Bohrung, in welche das Befestigungselement eingesetzt werden soll. Vor dem Einsetzen des Befestigungselementes wird deshalb das Bohrloch mit einer aushärtbaren Masse wenigstens teilweise verfüllt. Aus dieser Anmeldung ist jedoch nicht zu entnehmen, wie mehrere Frontblenden mehreren benachbart zueinander sitzenden Schubladenelementen zueinander in Relation exakt ausgerichtet werden sollen.

Die Erfindung wird nachfolgend anhand von Zeichnungen näher erläutert. Dabei zeigen im Einzelnen:
- Figur 1 :: eine Schublade in schematischer Darstellung eher in frontseitiger Ansicht;
- Figur 2 :: eine entsprechende räumliche Darstellung der in Figur 1 dargestellten Schublade eher von ihrer rückwärtigen Seite;
- Figur 3 :: eine frontseitige Draufsicht auf den Schubladenrahmen bei noch nicht montierter Schubladenblende;
- Figur 4 _{:}: eine rückwärtige Ansicht der noch nicht montierten Schubladenblende;
- Figur 5 :: eine vertikale Querschnittsdarstellung durch einen Ausschnitt einer Steckverbindung zwischen Schubladenrahmen und Schubladenblende;
- Figur 6 :: eine entsprechende horizontale Schnittdarstellung durch die vorstehend genannte Steckverbindung;
- Figur 7 :: eine entsprechende Darstellung zu Figur 6 nach dem Vergießen und Aushärten der Kunststoffmasse; und
- Figur 8 :: ein abgewandeltes Ausführungsbeispiel mit einer Möglichkeit zur Demotagen der Schubladenblende.

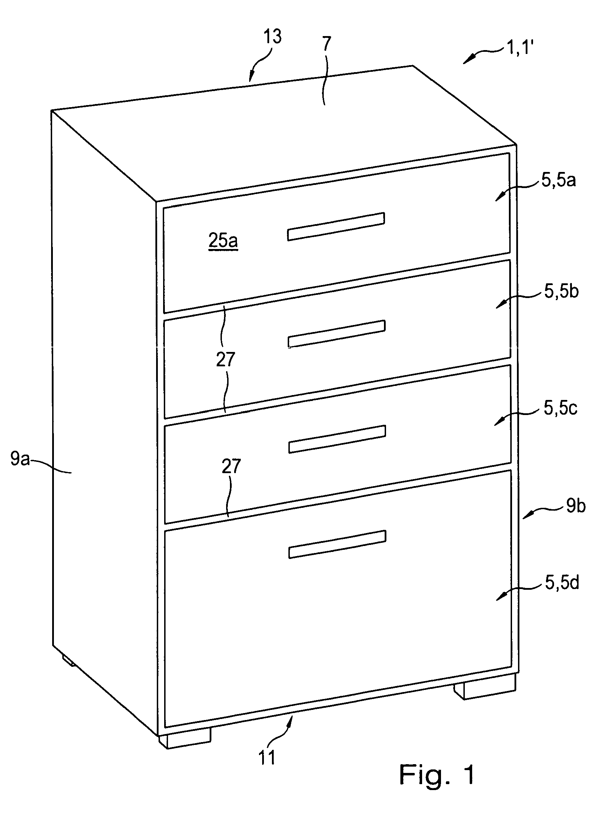

Anhand von Figur 1 ist in schematischer Darstellung ein Möbel 1 mit einem Möbelkorpus 1' gezeigt, welches nur beispielshaft zur Erläuterung der Erfindung dargestellt ist.

Das Möbel 1 umfasst beispielsweise vier Schubladen 5, wobei die ersten drei Schubladen 5a bis 5c gleiche Höhe und die unterste Schublade 5d eine größere Höhe aufweisen. Alle vier Schubladen sind übereinander angeordnet, weisen von daher wie üblich die gleiche Breite und die gleiche Tiefe auf.

Der Möbelkorpus 1' selbst umfasst eine obere Deckwand 7, zwei Seitenwände 9a und 9b, sowie einen Boden 11 und eine Rückwand 13, die in Figur 1 nicht sichtbar ist.

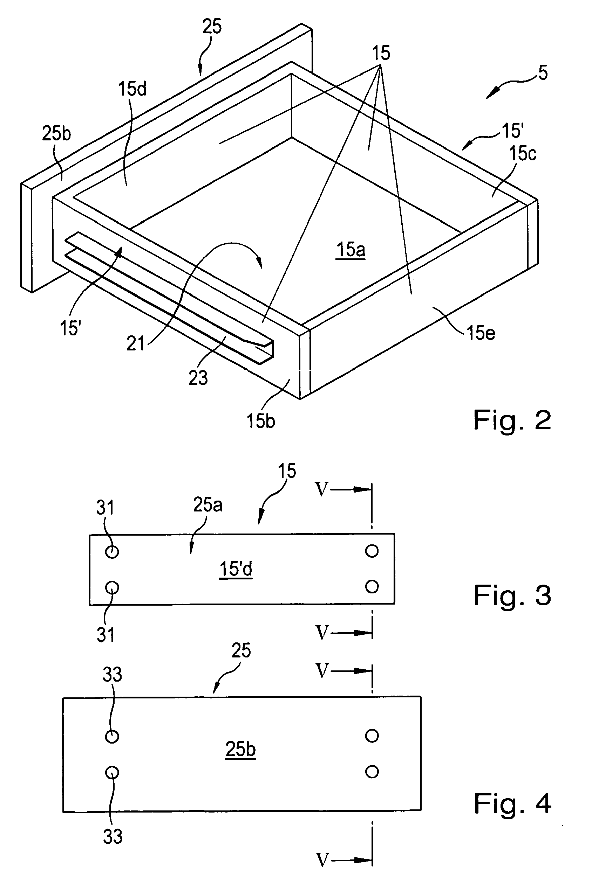

In Figur 2 ist in schematischer leicht rückwärtiger Darstellung nur eine mögliche Variante einer Schublade 5 dargestellt, die einen Schubladenrahmen 15 mit einem Schubladenboden 15a, eine linke und eine rechte parallel zueinander verlaufende Schubladen-Seitenwand 15b und 15c sowie eine frontseitige Schubladenwand 15d und eine rückwärtige Schubladenwand 15e umfasst, wodurch eine Schubladen-Aufnahmeraum 21 geschaffen ist.

Bei der sogenannten frontseitigen Seitenwange, d.h. der frontseitigen Schubladenwand 15d handelt es sich also um ein Teil, welches üblicherweise auch als Schubladenvorderstück oder Schubladenfront bezeichnet wird. Bei der rückwärtigen Schubladenwand 15e wird häufig auch von einem Schubladenhinterstück oder einer Schubladenrückwand gesprochen.

Üblicherweise sind an den gegenüberliegenden und voneinander weg weisenden Außenseiten 15' der beiden Schubladen-Seitenwände 15b, 15c Führungseinrichtungen 23 vorgesehen, die mit entsprechenden, nicht näher gezeigten Führungseinrichtungen zusammenwirken, die üblicherweise im Inneren des Möbelkorpus 1' vorgesehen sind, beispielsweise an zwei aufeinander zu weisenden Innenseiten der Seitenwände 9a, 9b, die dort in entsprechend gleicher Höhe für jede einzelne Schublade 5 vorgesehen sind. Daran werden die einzelnen Schubladen verankert und können über diese Führungseinrichtungen nach vorne hin ausgezogen oder in die in Figur 1 dargestellte Position eingeschoben werden. Die Führungseinrichtungen können dabei nach dem Gleit- aber auch nach dem Rollprinzip aufgebaut sein, insbesondere auch unter Verwendung von Teleskop-Einrichtungen, um die Schubladen leichtgängig möglichst weit ausfahren zu können. Es wird hier auf alle bekannten Varianten verwiesen, wie Schubladen in einen Möbelkorpus eingehängt und zwischen einer geöffneten und einer geschlossenen Position verstellt werden können.

Im gezeigten Ausführungsbeispiel ist in einem so gebildeten Schubladenrahmen 15 im Bereich der frontseitigen Wand 15d des Schubladenrahmens 15 eine Schubladenblende 25 verankert, die in der Regel in vertikaler wie horizontaler Querrichtung die Dimensionierung der dahinter befindlichen Schubladenrahmen überragt.

An der Schubladen-Frontseite 25a können Halte- oder Greifeinrichtungen zum Betätigen der Schublade vorgesehen sein. Die Schubladenblende 25 ist an ihrer Schubladen-Rückseite 25b mit dem Schubladenrahmen 15 und dabei insbesondere in der Regel mit der frontseitigen Schubladenwand 15d fest verbunden.

Üblicherweise werden in einem Möbelkorpus in entsprechender Höhe die an den Korpus-Innenwänden ausgebildeten Führungseinrichtungen montiert und der Möbelkorpus insgesamt hergestellt. Ebenso werden üblicherweise die Schubladenelemente fertig hergestellt, d.h. in ihrer endgültig verwendeten Form mit dem Schubladenrahmen 15 und der frontseitig daran befestigten Schubladenblende 25.

Bereits bei geringsten Toleranzfehlern führt dies allerdings dazu, dass beispielsweise bei dem in Figur 1 von vorne sichtbaren Möbel die zwischen zwei benachbarten Schubladen ausgebildeten Abstände 27 nicht immer über die gesamte Breite der Schublade von links nach rechts ein gleiches Maß aufweisen. Schon geringste Toleranzfehler können dazu führen, dass beispielsweise eine Schublade leicht schief montiert ist, mit der Folge, dass beispielsweise eine der erwähnten Abstandsspalten 27 zwischen zwei nebeneinander angeordneten Schubladen von links nach rechts zunimmt oder abnimmt. Derartige Fehler sind sofort sichtbar.

Von daher wird gemäß der vorliegenden Erfindung ein abweichendes Herstell- und Montageverfahren durchgeführt.

Im Rahmen der Erfindung wird ein Möbelkorpus fertig hergestellt, einschließlich der Führungseinrichtungen wie Schubladen. Auch der entsprechende Schubladenrahmen 15 wird in der Regel fertig hergestellt und dann in den Möbelkorpus 1' eingesetzt, allerdings noch ohne die frontseitigen Schubladenblenden.

Um die Schubladenblenden an den Schubladenrahmen 15 zu befestigen, sind entsprechende Steckverbindungen 29 vorgesehen, deren Aufbau nachfolgend erläutert wird.

Die Steckverbindungen 29 sind so aufgebaut, dass sie zum einen Steckelemente oder sogenannte Steckvorsprünge 31 aufweisen, die in entsprechende Einstecköffnungen oder Einsteckvertiefungen 33 eingesteckt werden können, wobei die Dimensionierung der Steckelemente oder Steckvorsprünge 31 quer zur Einsteckbewegung x kleiner ist als die entsprechende Dimensionierung der Einstecköffnungen bzw. der Einsteckvertiefungen 33. Mit anderen Worten wird dadurch ein ausreichendes Spiel 35, d.h. ein Freiraum 35 erzeugt, wobei die Steckelemente bzw. Steckvorsprünge 31 selbst in ihrer eingesteckten Position in den Einstecköffnungen bzw. Einsteckvertiefungen 33 für sich allein genommen noch keine feste Steckverbindung herstellen können.

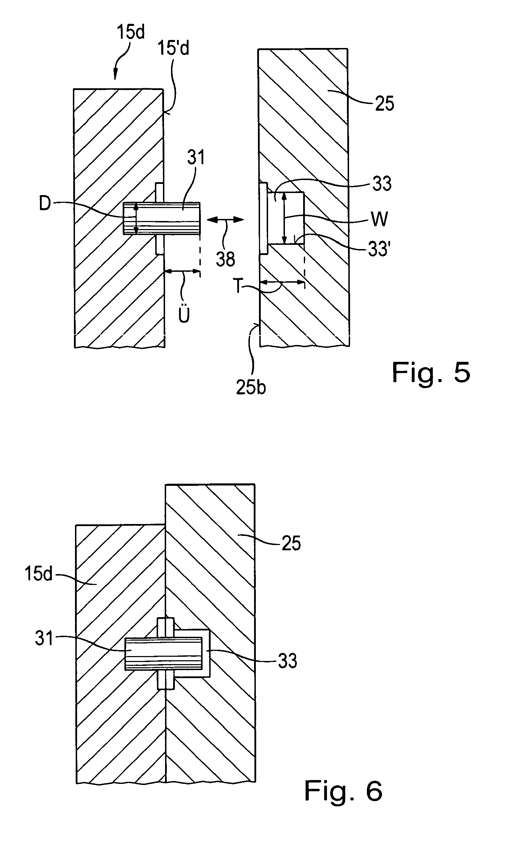

Figur 3 zeigt eine frontseitige Ansicht auf die Vorderseite 15'd der frontseitigen Wand 15d eines Schubladenrahmens 15, in welchem in einem vorgegebenen Raster beispielsweise eher links liegend zwei Steckelemente 31 und rechts liegend nochmals zwei Steckelemente 31 fest mit dem Schubladenrahmen verbunden vorgesehen sind, die gemäß der ausschnittsweisen Querschnittsdarstellung längs der Linie V in Querschnittsdarstellung in Figur 5 wiedergegeben sind. Daraus ist zu ersehen, dass an dem Schubladenrahmen beispielsweise über die Frontseite 15'd überstehende, im gezeigten Ausführungsbeispiel zapfenförmige Steckelemente oder Steckvorsprünge 31 verwendet werden.

Aus der rückwärtigen Darstellung gemäß Figur 4 unter Wiedergabe der rückwärtigen Seite 25b der Schubladenblende 25 ist zu ersehen, dass im gleichen Rastermaß wie in Figur 3 die mit den Steckelementen 31 zusammenwirkenden Einstecköffnungen oder Einsteckvertiefungen 33 angeordnet sind. In der ausschnittsweisen Querschnittsdarstellung gemäß Figur 5 sind dabei die Vertiefungen 33 zu ersehen.

Aus der Detail-Querschnittsdarstellung gemäß Figur 5 ist zu ersehen, dass das Durchmessermaß D der Steckelemente oder Steckvorsprünge 31 kleiner ist als das Weitenmaß W der Einstecköffnungen oder -vertiefungen 33. Ganz allgemein ist also der Durchmesser und die Querschnittform der Steckelemente 31 kleiner als der lichte Abstandsraum und/ oder die Querschnittsform der Einstecköffnungen 33.

Der Überstand Ü der Steckelemente 31 in Erstreckungsrichtung 37 gemäß der Doppelpfeildarstellung 38 ist gleich oder kleiner als das Tiefenmaß T der Einstecköffnung 33.

Durch die erwähnten Steckelemente oder -vorsprünge 31 und die erwähnten Einstecköffnungen oder -vertiefungen 33 wird eine Vorjuster-Einrichtung J geschaffen, die beim Aufsetzen der Blenden unter Eingreifen der Einsteckvorsprünge in die Einsteckvertiefungen eine Vorjustierung der Blende 25 in Relation zum zugehörigen Schubladenrahmen 15 ermöglicht.

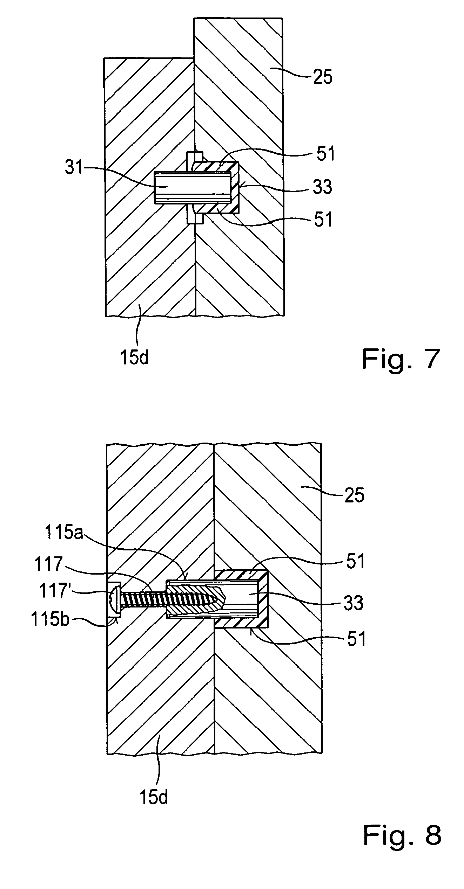

Anhand von Figur 6 ist dabei nur schematisch in einem Detailausschnitt gezeigt, wenn die Blende 25 an ihrer rückwärtigen Seite 25b mit der Frontseite 15'd in Anlage zueinander gebracht wird, wenn also die jeweiligen Steckvorsprünge 31 in die entsprechenden Steckausnehmungen 33 eingreifen. Daraus ist zu ersehen, dass zwischen der Umfangsfläche 31' der Steckvorsprünge 31 und der Innenfläche 33' der Einsteckvertiefungen 33 ein Abstand 35 gebildet ist, der als Freiraum oder Spiel 35 bezeichnet wird. Figur 6 soll nur in Ergänzung zu Figur 5 die Verhältnisse wiedergeben, d.h. den bestehenden Freiraum oder das Spiel 35 verdeutlichen, wenn eine Blende auf der Frontseite eines Schubladenrahmens aufgesetzt ist. Die eigentliche weitere Montage und Befestigung der Schubladenblende an einem Schubladenrahmen wird nachfolgend anhand von Figur 7 näher erläutert.

Um nunmehr die Blende 25 am Schubladenrahmen 15 fest zu verankern, werden, wie erwähnt, alle vorgefertigten Schubladenrahmen 15 in den Möbelkorpus 1' eingesetzt. Anschließend werden alle Einstecköffnungen bzw. -vertiefungen 33 aller Schubladenblenden mit einer durch Erhitzen fließfähig gemachten Kunststoffmasse befüllt und/oder die im gezeigten Ausführungsbeispiel an dem Schubladenrahmen 15 an der Frontseite 15d' vorstehenden Steckelemente oder - vorsprünge 31 mit einer durch Erhitzen fließfähig gemachten Kunststoffmasse in ausreichendem Maße bedeckt. Insoweit wird nachfolgend auch von einer Heißplastik oder einem Heißkunststoff gesprochen, der unter entsprechender Erhitzung fließfähig ist und im abgekühlten Zustand fest und starr wird bzw. aushärtet.

Unmittelbar danach werden dann alle Schubladenblenden 25 auf die jeweils ihnen zugeordneten Schubladenrahmen 15 aufgesteckt, derart, dass jeweils die entsprechenden Einsteckelemente bzw. -vorsprünge 31 in den betreffenden Einstecköffnungen bzw. vertiefungen 33 eingreifen und während dieser Aufsteckbewegung die in der Einstecköffnung 33 befindliche, zumindest zähfließfähige Kunststoffmasse 51 unter Ausfüllung des freien Spielraumes zwischen dem jeweiligen Steckelement 31 und der zugehörigen Einstecköffnung 33 verdrängen. In dieser Phase können dann alle Schubladenblenden 25 beispielsweise unter Verwendung einer Montier-Lehre oder -Hilfe exakt parallel zueinander ausgerichtet werden, indem beispielsweise leicht keilförmige Zungen der Justier-Hilfe in die Abstandsbereiche 27 zwischen zwei benachbarten Schubladenblenden eingreifen und dadurch sicherstellen, dass alle Abstände 27 zwischen allen Schubladenblenden 25 nicht nur gleich, sondern auch von links nach rechts verlaufend exakt identisch sind.

Durch das erwähnte Spiel, d.h. den Freiraum 35 zwischen den Steckelementen 31 und den Innenflächen der Wandungen 33' der Einstecköffnungen 33 können also die Blenden während dieses Prozesses selbst bei bestehenden Toleranzfehlern der montierten Schubladenrahmen in optimal exakter Position zueinander ausgerichtet werden, wobei die erwähnte Justierhilfe durch das Zusammenspiel der Einsteckvorsprünge oder der Einsteckvertiefungen hilfreich ist, um eine Vorjustierung unter Verwendung der unter Hitzeeinwirkung fließfähigen Heißplastik 51 vornehmen zu können. Durch Verwendung der Justierhilfe oder Justier-Lehre erfolgt dann die exakte End-Ausrichtung. Da eine unter Erwärmung fließfähig gemachte Kunststoffmasse 51 verwendet wird, die beispielsweise schon in 20 bis 40 Sek. aushärten kann, sind die durch den beschriebenen Herstellprozess exakt ausgerichteten Schubladenelemente bereits in kürzester Zeit in dieser exakten Ausrichtposition fest an den jeweils zugehörigen Schubladenrahmen befestigt, und selbst dann in exakter idealer paralleler Ausrichtung zueinander, wenn die eigentlichen Führungseinrichtungen und/oder Schubladenrahmen 15 nicht 100%ig exakt zueinander ausgerichtet und im Korpus untergebracht sind, hier also Toleranzfehler bestehen. Anhand von Figur 6 ist dann vergleichbar zu Figur 5 die endgültige Fixierlage gezeigt, bei der beispielsweise durch die leicht asymmetrische Anordnung des wiedergegebenen Einsteckvorsprungs 31 in Relation zur Einsteckvertiefung 33 kenntlich gemacht ist, dass hier geringfügige Abweichungen notwendig waren, um die Blende 25 letztendlich 100%ig exakt ausgerichtet am Schubladenrahmen zu fixieren. In dieser fixierten Position ist dann der Freiraum oder das Spiel durch die völlig steife ausgehärtete Heißplastik (Kunststoffmasse) 51 ausgefüllt, wodurch die erwähnte Blende 25 am Schubladenrahmen 15 unbewegbar fixiert ist.

Anhand der Schnittdarstellung gemäß Figuren 5 und 6 ist ferner nur schematisch angedeutet, dass beispielsweise benachbart zu einem Einsteckelement 21 an der Frontseite 15'd der frontseitigen Wand 15d des Schubladenrahmens 15 und/oder benachbart zu der Einstecköffnung 33 an der rückwärtigen Seite 25b des Schubladenrahmens 15 noch eine umlaufende Vertiefung 39a bzw. 39b vorgesehen sein kann, die beispielsweise noch als Aufnahmeraum von überschüssiger Kunststoffmasse dienen kann. Üblicherweise wird aber nur so viel Kunststoffmasse in eine Einstecköffnung 33 vor der Montage gegeben, die zur Ausfüllung des verbleibenden Freiraums zwischen dem Steckelement 31 und der Innenwandung der Einstecköffnung 33 benötigt wird.

Abweichend vom gezeigten Ausführungsbeispiel könnten die Steckelemente bzw. -vorsprünge 31 auch an der Rückseite der Schubladenblende 25 vorgesehen sein, wobei dann die entsprechenden Einstecköffnungen bzw. -vertiefungen 33 an der Frontseite des Schubladenrahmens 15 vorgesehen wären. Genauso können auch an dem Schubladenrahmen 15 wie aber auch an der Rückseite der Schubladenblende zum Teil an einigen Stellen Steckelemente 31 und an anderen Stellen Einstecköffnungen 33 vorgesehen sein, wobei an der Rückseite der Schubladenblende dann an den damit korrespondierenden Stellen die Gegeneinrichtungen vorgesehen sind, also entweder die Einsteckvertiefungen bzw. die Einsteckelemente, um eine feste Verbindung zu ermöglichen.

Der Durchmesser der Steckelemente oder Steckvorsprünge 31 sowie das Weitenmaß W der Einstecköffnungen bzw. -vertiefungen 33 kann in weiten Bereichen gewählt und variiert werden, um einen als ausreichend empfundenen Freiraum oder ein als ausreichend empfundenes Spiel 35 zu erzeugen. Beispielsweise können die Einsteckelemente 31 einen Durchmesser von 8 mm und die Einstecköffnungen einen lichten Durchmesser von 10 mm aufweisen. Mit anderen Worten ergibt sich dadurch ein Spiel von etwa 20% bezogen auf den Durchmesser der Einsteckvertiefungen.

Wird beispielsweise das lichte Weitenmaß W für die Einstecköffnungen 33 mit 100% angesetzt, so müsste der Durchmesser des Einsteckelementes 31 demgegenüber kleiner sein, und beispielsweise ein Maß aufweisen, das bezogen auf das Weitenmaß W der Einstecköffnung demgegenüber als 95%, 90%, 85%, 80%, 75%, 70%, 65%, 60%, 55% oder 50% oder noch weniger beträgt. Die Größe des Abstandsraumes 35 hängt letztlich davon ab, wie groß die maximal erwarteten Toleranzfehler bei der Produktion sind, die durch das erfindungsgemäße Verfahren ausgeglichen werden sollen.

Das Ausführungsbeispiel ist unter Verwendung von Heißplastik 51, d.h. Heißkunststoff 51 erläutert worden, welcher unter entsprechender Erhitzung fließfähig wird und schnell während des Auskühlprozesses abhärtet. Ebenso könnte bei Bedarf auch die Verwendung von hart klebenden Klebemassen 51 geeignet sein, die möglichst schnell aushärten, beispielsweise unter Luft oder Anwendung von Wärme, Druck etc..

Nachfolgend wird noch auf eine Abwandlung gemäß Figur 8 Bezug genommen.

Die Detaildarstellung gemäß Figur 8 entspricht vom Prinzip her den Darstellung der entsprechend vorausgegangenen Figuren 1 bis 7. Unterschiedlich ist lediglich, dass der auch in den Figuren 1 bis 7 gezeigte Einsteckvorsprung 31 an der frontseitigen Seitenwange, also dem sogenannten Schubladenvorderstück oder der Schubladenfront 15d nicht dauerhaft fest verankert, beispielsweise eingeklebt, eingepresst etc. ist, sondern dass dieses Steckelement 31 in eine entsprechende Vertiefung 115a in der frontseitigen Wand 15d des Schubladenrahmens 15 eingesetzt und durch eine beispielsweise von der Rückseite her eingedrehte Schraube 117 gehalten ist, die die Schubladenfront 15d von der rückwärtigen Seite her durchsetzt und bis in den Steckvorsprung 31 eingreift. Allgemein sollte also das Steckelement oder der Dübel 31 durch irgendeine geeignete Schraubverbindung, beispielsweise unter Verwendung eines Schraubbolzens, der durch eine Mutter gesichert ist etc., lösbar am Schubladenrahmen befestigt sein. Der Schraubenkopf 117' kann dabei beispielsweise in der Vertiefung 115b sitzen. Dies bietet nämlich die Möglichkeit, dass die ansonsten nicht mehr zerstörungs- oder beschädigungsfrei demontierbare Blende 25 von dem Schubladenrahmen 15 dadurch entfernt werden kann, dass die erwähnte Schraube 117 herausgedreht wird. Dann kann nämlich die Blende 25 mit dem in der Ausnehmung 33 fest eingegossenen Steckelement (Dübel) 31 vom Schubladenrahmen 15 abgenommen und beispielsweise durch eine andere Blende (wenn sie beschädigt war etc.) ersetzt werden. Obwohl also bei diesem Ausführungsbeispiel das Steckelement bzw. der Dübel 31 mit dem Schubkasten (also dem Schubladenrahmen 15) über eine lösbare Schraube verbunden ist, kann trotz der erfolgten Verklebung mit Flüssigklebstoff später noch eine Demontage vorgenommen werden. Dadurch wird also im Gegensatz zu den anderen Ausführungsbeispielen gewährleistet, dass die Blende vom Schubladenrahmen beschädigungsfrei gelöst werden kann.

Das Ausführungsbeispiel ist anhand eines Schubladenrahmens 15 erörtert worden, welcher benachbart zur Schubladenblende 25 eine frontseitige Wand 15d umfasst, an welcher die Blende 25 befestigt ist. Eine solche separate Frontplatte 25 muss aber an sich gar nicht vorgesehen sein, wenn nämlich beispielsweise die zum Schubladenrahmen 15 gehörenden Seitenwangen und auch der Boden 15a vorgesehen sind, die direkt oder mittelbar an der Rückseite der Schubladenblende 25 durch die im Rahmen der erläuterten Ausführungsbeispiele vorgesehenen Einsteckelemente und Einsteckvertiefungen etc. befestigbar sind.

## Patentansprüche

1. Verfahren zur Herstellung eines Möbels, welches mehrere Schubladen jeweils mit einer Schubladenblende (25) und einem Schubladenrahmen (15) umfasst, mit folgenden Verfahrensschritten:
- die Frontseiten (15d) der mehreren Schubladenrahmen (15) werden mit Steckelementen bzw. -vorsprüngen (31) und/oder mit Einstecköffnungen bzw. -vertiefungen (33) versehen,
- die Rückseiten (25b) der mit dem zugehörigen Schubladenrahmen (15) zu verbindenden Schubladenblenden (25) werden mit Einstecköffnungen bzw. - vertiefungen (33) und/oder mit Steckelementen bwz. -vorsprüngen (31) versehen,
- die Steckelemente oder -vorsprünge (31) weisen ein lichtes Maß (D) auf, welches kleiner ist als das freie Innenmaß (W) der Einstecköffnungen bzw. - vertiefungen (33), und zwar unter Ausbildung eines Freiraums oder Spiels (35),
- die Schubladenblenden (25) werden an dem zugehörigen Schubladenrahmen (15) dadurch befestigt, dass in die Einstecköffnungen oder -vertiefungen (33) und/oder auf die Steckelemente oder -vorsprünge (31) eine fließfähige Kunststoff- oder Klebemasse (51) gegeben wird,
- die Schubladenblenden (25) werden so auf die Frontseite (15d) der zuvor in einem Möbelkorpus (1') an der dafür vorgesehenen Stelle eingesetzten Schubladenrahmen (15) aufgesetzt, dass die vorgesehenen Steckelemente oder -vorsprünge (31) in die damit korrespondierenden Einstecköffnungen bzw. -vertiefungen (33) eingreifen, wobei der Freiraum oder das Spiel (35) durch die fließfähige Kunststoff- oder Klebemasse (51) ausgefüllt ist, und
- die Schubladenblenden (25) werden mit exakter paralleler Ausrichtung zueinander ausgerichtet und/oder ausgerichtet gehalten, bis die aushärtbare Kunststoff- oder Klebemasse ausgehärtet und die Schubladenblenden (25) an dem jeweils zugehörigen Schubladenrahmen (15) fixiert sind.

2. Verfahren nach Anspruch 1, **dadurch gekennzeichnet, dass** Steckelemente oder -vorsprünge (31) verwendet werden, deren Querschnittsmaß oder Durchmesser (D) zumindest 5%, insbesondere zumindest 10%, 15%, 20%, 25%, 30%, 35%, 40%, 45% oder zumindest 50% kleiner ist als das lichte Innenmaß (W) der Einstecköffnungen oder -vertiefungen (33).

3. Verfahren nach einem der Ansprüche 1 oder 2, **dadurch gekennzeichnet, dass** die Steckelemente oder -vorsprünge (31) mittels einer Schraubverbindung am Schubladenrahmen (15), insbesondere an einer benachbart zur Schubladenblende (25) vorgesehenen Frontseite (15d) des Schubladenrahmens (15) befestigt werden.

4. Verfahren nach einem der Ansprüche 1 bis 3, **dadurch gekennzeichnet, dass** Steckelemente bzw. -vorsprünge (31) verwendet werden, deren Durchmessermaß (D) 5% bis 50% kleiner ist als das lichte Innenmaß (W) der Einstecköffnungen bzw. -vertiefungen (33), vorzugsweise 15% bis 25% kleiner ist als das lichte Innenmaß (W) der Einstecköffnungen bzw. -vertiefungen (33).

5. Verfahren nach einem der Ansprüche 1 bis 4, **dadurch gekennzeichnet, dass** als aushärtbare Masse Heißplastik (51) verwendet wird, die im erwärmten Zustand fließfähig ist.

6. Verfahren nach einem der Ansprüche 1 bis 5, **dadurch gekennzeichnet, dass** Steckelemente bzw. -vorsprünge (31) verwendet werden, die aus Plastik-Zapfen bestehen oder diese umfassen.

7. Verfahren nach einem der Ansprüche 1 bis 6, **dadurch gekennzeichnet, dass** Schubladenrahmen (15) und Schubladenblenden (25) verwendet werden, bei denen einige oder alle Steckelemente oder -vorsprünge (31) an der Frontseite (15'd) des zugehörigen Schubladenrahmens (15) und einige oder alle Einstecköffnungen bzw. -vertiefungen (33) auf der Rückseite (15b) der zugehörigen Schubladenblende (25) vorgesehen sind.

8. Verfahren nach einem der Ansprüche 1 bis 7, **dadurch gekennzeichnet, dass** Frontseiten (15'd) und Schubladenelemente (25) verwendet werden, bei denen zumindest einige oder alle Einstecköffnungen oder -vertiefungen (33) an der Frontseite (15'd) eines zugehörigen Schubladenrahmens (15) und einige oder alle Steckelemente oder -vorsprünge (31) auf der Rückseite (15b) einer zugehörigen Schubladenblende (25) ausgebildet sind.

9. Verfahren nach einem der Ansprüche 1 bis 8, **dadurch gekennzeichnet, dass** Frontseiten (15'd) und Schubladenrahmen (15) verwendet werden, die benachbart zu den Steckelementen bzw. -vorsprüngen (31) und/oder zu den Einstecköffnungen bzw. -vertiefungen (33) eine Vertiefung (39a, 39b) zur Aufnahme von überschüssiger Kunststoff- oder Klebemasse aufweisen.

10. Verfahren nach einem der Ansprüche 1 bis 9, **dadurch gekennzeichnet, dass** Steckelemente oder Steckvorsprünge (31) verwendet werden, die mittels einer Schraubverbindung an dem Schubladenrahmen (15) lösbar befestigt werden, vorzugsweise an einer frontseitigen Schubladenwand (15d).

## Claims

1. Method for producing a piece of furniture comprising a plurality of drawers which each have a drawer front (25) and a drawer frame (15), said method comprising the following method steps:
- the front sides (15d) of the plurality of drawer frames (15) are provided with connecting elements or connecting projections (31) and/or with insertion openings or insertion depressions (33),
- the rear sides (25b) of the drawer fronts (25) to be connected to the associated drawer frame (15) are provided with insertion openings or insertion depressions (33) and/or with connecting elements or connecting projections (31),
- the connecting elements or connecting projections (31) have a clear dimension (D) which is smaller than the free inner dimension (W) of the insertion openings or insertion depressions (33), and specifically a free space or clearance (35) is formed,
- the drawer fronts (25) are fastened to the associated drawer frame (15) in that a free-flowing plastics material or adhesive (51) is provided in the insertion openings or insertion depressions (33) and/or on the connecting elements or connecting projections (31),
- the drawer fronts (25) are placed on the front side (15d) of the drawer frame (15), which has been previously inserted into a furniture carcass (1') at the point provided therefor, such that the connecting elements or connecting projections (31) provided engage in the corresponding insertion openings or insertion depressions (33), wherein the free space or clearance (35) is filled with the free-flowing plastics material or adhesive (51), and
- the drawer fronts (25) are aligned and/or are held in alignment so as to be exactly parallel to one another until the curable plastics material or adhesive has cured and the drawer fronts (25) are fixed to the associated drawer frame (15) in each case.

2. Method according to claim 1, **characterised in that** connecting elements or connecting projections (31) are used of which the cross section or diameter (D) is at least 5 %, in particular at least 10 %, 15 %, 20 %, 25 %, 30 %, 35 %, 40 %, 45 % or at least 50 % smaller than the clear inner dimension (W) of the insertion openings or insertion depressions (33).

3. Method according to either claim 1 or claim 2, **characterised in that** the connecting elements or connecting projections (31) are fastened to the drawer frame (15), in particular to a front side (15d) of the drawer frame (15) which is adjacent to the drawer front (25), by means of a screw connection.

4. Method according to any of claims 1 to 3, **characterised in that** connecting elements or connecting projections (31) are used of which the diameter (D) is from 5 % to 50 % smaller than the clear inner dimension (W) of the insertion openings or insertion depressions (33), preferably from 15 % to 25 % smaller than the clear inner dimension (W) of the insertion openings or insertion depressions (33).

5. Method according to any of clams 1 to 4, **characterised in that** hot plastics (51), which is free-flowing when heated, is used as the curable material.

6. Method according to any of claims 1 to 5, **characterised in that** connecting elements or connecting projections (31) which consist of or comprise plastics pins are used.

7. Method according to any of claims 1 to 6, **characterised in that** drawer frames (15) and drawer fronts (25) are used in which some or all of the connecting elements or connecting projections (31) are provided on the front side (15'd) of the associated drawer frame (15) and some or all of the insertion openings or insertion depressions (33) are provided on the rear side (15b) of the associated drawer front (25).

8. Method according to any of claims 1 to 7, **characterised in that** front sides (15'd) and drawer elements (25) are used in which at least some or all of the insertion openings or insertion depressions (33) are formed on the front side (15'd) of an associated drawer frame (15) and some or all of the connecting elements of connecting projections (31) are formed on the rear side (15b) of an associated drawer front (25).

9. Method according to any of claims 1 to 8, **characterised in that** front sides (15'd) and drawer frames (15) are used which have a depression (39a, 39b) for receiving excess plastics material or adhesive which is adjacent to the connecting elements or connecting projections (31) and/or to the insertion openings or insertion depressions (33).

10. Method according to any of claims 1 to 9, **characterised in that** connecting elements or connecting projections (31) are used which can be detachably fastened to the drawer frame (15), preferably to a front drawer wall (15d), by means of a screw connection.

## Revendications

1. Procédé pour fabriquer un meuble, qui inclut plusieurs tiroirs ayant chacun une façade de tiroir (25) et un cadre de tiroir (15), comprenant les étapes de procédé suivantes :
- les côtés frontaux (15d) des plusieurs cadres de tiroirs (15) sont dotés d'éléments d'enfichage ou de saillies d'enfichage (31) et/ou d'ouvertures d'enfichage ou de renfoncements d'enfichage (33),
- les côtés postérieurs (25b) des façades de tiroirs (25) à relier aux cadres de tiroirs associés (15) sont dotés d'ouvertures d'enfichage ou de renfoncements d'enfichage (33) et/ou d'éléments d'enfichage ou de saillies d'enfichage (31),
- les éléments d'enfichage ou saillies d'enfichage (31) présentent une dimension libre (D) qui est plus petite que la dimension intérieure libre (W) des ouvertures d'enfichage ou des renfoncements d'enfichage (33) et cela en réalisant un espace libre ou un jeu (35),
- les façades de tiroirs (25) sont fixées sur les cadres de tiroirs associés (15) du fait que l'on apporte une masse de matière plastique ou une masse de colle (51) capable de s'écouler dans les ouvertures d'enfichage ou les renfoncements d'enfichage (33) et/ou sur les éléments d'enfichage ou saillies d'enfichage (31),
- les façades de tiroirs (25) sont rapportées sur le côté frontal (15d) d'un cadre de tiroir (55) mis auparavant en place dans un corps de meuble (1') à l'emplacement prévu à cet effet, de telle manière que les éléments ou les saillies d'enfichage prévu(e)s (31) s'engagent dans les ouvertures ou renfoncements d'enfichage (33) qui leur correspondent, de sorte que l'espace libre ou le jeu (35) est rempli par la masse de matière plastique ou de colle (51) capable de s'écouler, et
- les façades de tiroirs (25) sont orientées et/ou maintenues orientées les unes par rapport aux autres avec une orientation exactement parallèle, jusqu'à ce que la masse de matière plastique ou de colle durcissable soit durcie et les façades de tiroirs (25) sont fixées au cadre de tiroir respectivement associé.

2. Procédé selon la revendication 1, **caractérisé en ce que** l'on utilise des éléments ou des saillies d'enfichage (31) dont la dimension de section transversale ou le diamètre (D) est plus petite d'au moins 5 %, en particulier d'au moins 10 %, 15 %, 20 %, 25 %, 30 %, 35 %, 40 %, 45 % ou d'au moins 50 % que la dimension intérieure libre (W) des ouvertures ou renfoncements d'enfichage (33).

3. Procédé selon l'une des revendications 1 ou 2, **caractérisé en ce que** les éléments ou saillies d'enfichage (31) sont fixé(e)s au moyen d'une liaison vissée sur le cadre de tiroir (15), en particulier sur un côté frontal (15d), prévu au voisinage de la façade de tiroir (25), du cadre de tiroir (15).

4. Procédé selon l'une des revendications 1 à 3, **caractérisé en ce que** l'on utilise des éléments ou saillies d'enfichage (31) dont la dimension en diamètre (D) est plus petite de 5 % à 50 % que la dimension intérieure libre (W) des ouvertures ou des renfoncements d'enfichage (33), et de préférence plus petite de 15 % à 25 % que la dimension intérieure libre (W) des ouvertures ou des renfoncements d'enfichage (33).

5. Procédé selon l'une des revendications 1 à 4, **caractérisé en ce que** l'on utilise à titre de masse durcissable une matière thermoplastique (51) qui est capable de fluer à l'état réchauffé.

6. Procédé selon l'une des revendications 1 à 5, **caractérisé en ce que** l'on utilise des éléments ou des saillies d'enfichage (31) qui sont constitué(e)s par des tenons en matière plastique ou qui utilisent ceux-ci.

7. Procédé selon l'une des revendications 1 à 6, **caractérisé en ce que** l'on utilise des cadres de tiroirs (15) et des façades de tiroirs (25) dans lesquel(le)s quelques-un(e)s ou tou(te)s les éléments ou saillies d'enfichage (31) sont prévu(e)s sur le côté frontal (15'd) du cadre de tiroir associé (15) et quelques-un(e)s ou tou(te)s les ouvertures ou renfoncements d'enfichage (33) sont prévu(e)s sur le côté postérieur (15b) de la façade de tiroir associée (25).

8. Procédé selon l'une des revendications 1 à 7, **caractérisé en ce que** l'on utilise des côtés frontaux (15' d) et des éléments de tiroir (25) dans lesquels au moins quelques-un(e)s ou tou(te)s les ouvertures ou renfoncements d'enfichage (33) sont réalisé(e)s sur le côté frontal (15'd) d'un cadre de tiroir associé (15) ou quelques-un(e)s ou tou(te)s les éléments ou saillies d'enfichage (31) sont réalisé(e)s sur le côté postérieur (15b) d'une façade de tiroir associée (25).

9. Procédé selon l'une des revendications 1 à 8, **caractérisé en ce que** l'on utilise des côtés frontaux (15'd) et des cadres de tiroirs (15) qui comportent au voisinage des éléments ou saillies d'enfichage (31) et/ou au voisinage des ouvertures ou renfoncements d'enfichage (33) un renfoncement (39a, 39b) pour recevoir la masse de matière plastique ou de colle en excès.

10. Procédé selon l'une des revendications 1 à 9, **caractérisé en ce que** l'on utilise des éléments ou des saillies d'enfichage (31) qui sont fixé(e)s de manière détachable sur le cadre de tiroir (15) au moyen d'une liaison vissée, de préférence sur une paroi de tiroir du côté frontal (15d).
